# FASCICULE DE BREVET EUROPEEN

(11) **EP 2 951 464 B1**
(45) Date de publication et mention de la délivrance du brevet: **14.12.2016**
(21) Numéro de dépôt: 14704378.0
(22) Date de dépôt: 14.01.2014
(51) Int. Cl.: F16H 1/28, F16H 1/32

(54) **DISPOSITIF D'ELIMINATION DE L'ECART DE POSITION DANS REDUCTEUR À ROUE ORBITAL**
VORRICHTUNG ZUR UNTERDRÜCKUNG VON LAGEABWEICHUNGEN IN EINEM UNTERSETZUNGSGETRIEBE MIT EINEM UMLAUFENDEN RAD
DEVICE FOR SUPPRESSING POSITIONAL DEVIATION IN A REDUCTION GEAR HAVING AN ORBITAL WHEEL

(30) Priorité: 31.01.2013 FR 1300200
(43) Date de publication de la demande: 09.12.2015
(73) Titulaire: BARANGER, Claude Paul, 37540 Saint Cyr sur Loire (FR)
(72) Inventeur: BARANGER, Claude Paul, 37540 Saint Cyr sur Loire (FR)
(74) Mandataire: Gicquel, Frédéric
(86) Numéro de dépôt international: PCT/FR2014/000008
(87) Numéro de publication internationale: WO 2014/118446

(56) Documents cités:
- EP-A1- 1 120 583
- BE-A1- 466 957
- JP-A- H0 526 303
- LU-A1- 28 361

## Description

Dispositif d'élimination de l'écart de position dans réducteur à roue orbital.

L'invention concerne un dispositif de suppression des écarts de position dus à l'inversion de sens du mouvement, préservant le jeu fonctionnel d'engrènement des réducteurs de vitesse conçus avec une couronne à denture intérieure (3) fixe concentrique avec un arbre d'entrée (7) et muni d'une partie excentrée (7E) entraînant dans sa rotation une roue orbitale (4) constituée par deux roues à dentures extérieures solidaires, l'une (4Z) engrenant avec la couronne à denture intérieure (3), l'autre (4X) engrenant avec la couronne à denture intérieure (5Y) de l'arbre de sortie (5).

Le document LU28361A1 montre la préambule de la revendication 1.

### Historique de l'invention

Ce type de mécanisme est déjà décrit partiellement dans FR 0000894, FR A 2592121, EP O 315 609 A1 et WO 9604493A1. Le dernier concerne une denture particulière obtenue par décalage important des diamètres primitifs et taillée dans la couronne afin d'améliorer les problèmes d'interférences liés à cette disposition du pignon à l'intérieur de la couronne, le troisième se rapporte exclusivement à une roue orbitale faisant partie intégrante de la bague extérieure d'un roulement à billes, le second se limite exclusivement à une roue orbitale comportant des dentures dans un même plan axial, le premier correspond partiellement au mécanisme proposé. Les éléments nouveaux complémentaires permettent d'améliorer le fonctionnement, de simplifier la réalisation et d'étendre le champ des applications.

### But et caractéristiques essentielles de l'invention.

La mise en place d'un tel système dans ce type de réducteur ayant une très grande rigidité permet d'exploiter au mieux les performances des actionneurs numérisés utilisés en robotique. L'élimination totale de l'effet du jeu d'engrènement est obtenue par la mise en place sur chaque train d'une couronne à denture identique et concentrique à celle transmettant l'effort du mouvement et assurant pendant la rotation le blocage de la denture de la roue avec l'aide permanente d'un ressort réalisé soit par des lames disposées en éventail autour d'un moyeu cannelé, ou bien réalisé par une empreinte moulée en élastomère. Pour chaque train d'engrenages un dispositif de mise en pression intégré dans les fixations des supports assure la faible déformation des ressorts nécessaire à l'obtention d'un moment de blocage supérieur aux valeurs nominales du moment du réducteur. Le blocage de chaque dent d'engrènement permet une construction habituelle des engrenages et préserve ainsi le rendement. La disposition et la conception amovible des masselottes permet un équilibrage dynamique selon les règles de l'art de l'ensemble roue orbitale avec l'excentrique adapté pour chaque cas de réduction, la simplicité du montage et de l'entraînement en rotation correspond à l'exigence économique du coût de réalisation.
La conception robuste de chaque train et la transmission de l'effort d'entraînement directement de denture en denture sans organe complémentaire confèrent à ce réducteur une rigidité à la torsion exceptionnelle.
Ces mécanismes complètent avantageusement l'aptitude de ce principe de réduction capable de nombreux rapports justes ou dits « finis » très utiles au contrôle des mouvements avec des axes numérisés, les deux exemples ci-dessous montrent ces possibilités.

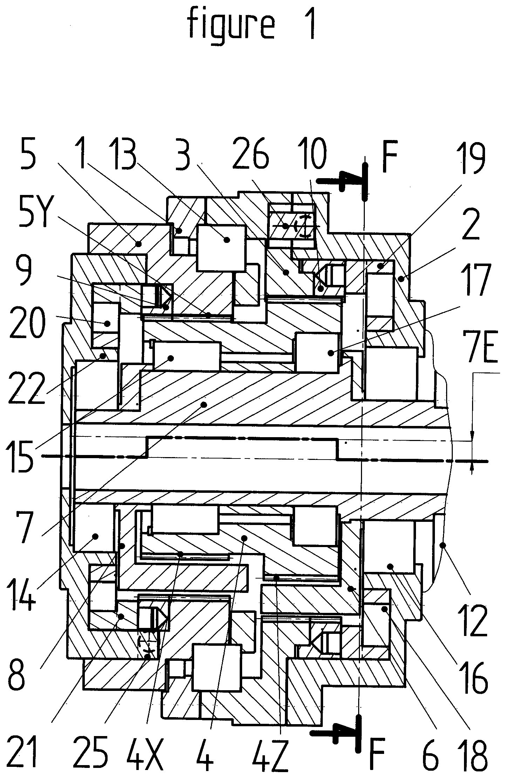

### Description de la figure 1.

La figure représente un réducteur disposant d'un arbre d'entrée(7) associé à une transmission parallèle ou orthogonale de liaison avec le moteur. Un trou central est disponible dans cette version. La liaison de l'arbre de sortie (5) avec l'organe entraîné est de type plateau. Un système élastique associé à une couronne dentée assure sur chaque train le blocage de la dent d'engrènement.

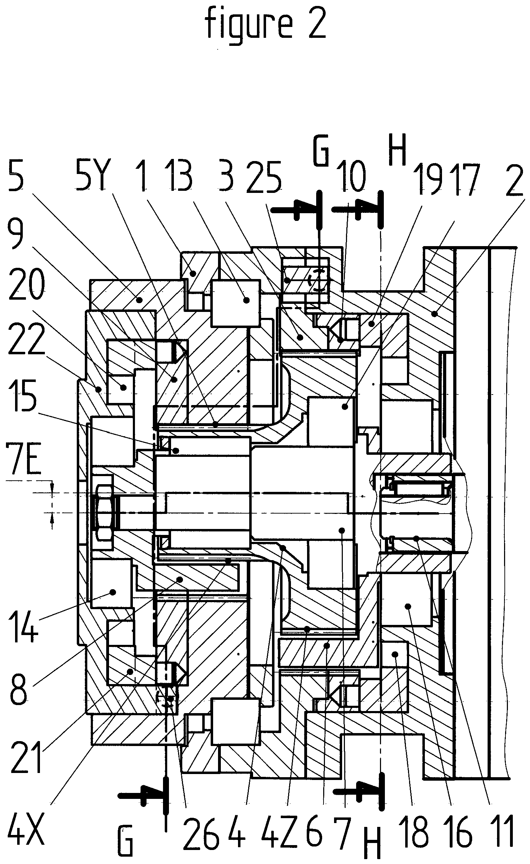

### Description de la figure 2.

La figure représente un réducteur avec un arbre d'entrée (7) associé au moteur coaxial par une douille cannelée. La liaison de l'arbre de sortie (5) avec l'organe entraîné est de type plateau. Un système élastique associé à une couronne dentée assure sur chaque train le blocage de la dent d'engrènement.

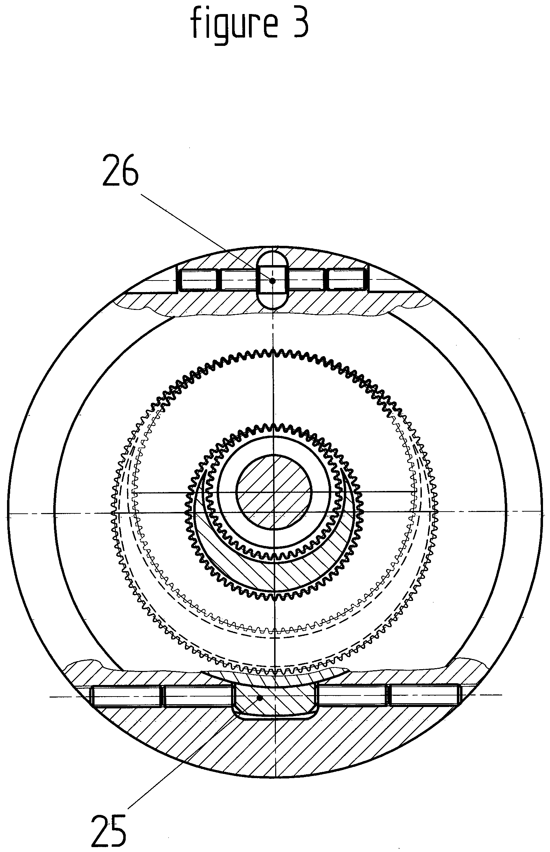

### Description de la figure 3.

La figure représente une coupe partielle suivant G-G de la figure 2, elle montre chaque dispositif de mise en pression des ressorts intégrés dans chaque liaison ainsi que la forme des excroissances des masselottes d'équilibrage (6) et (8).

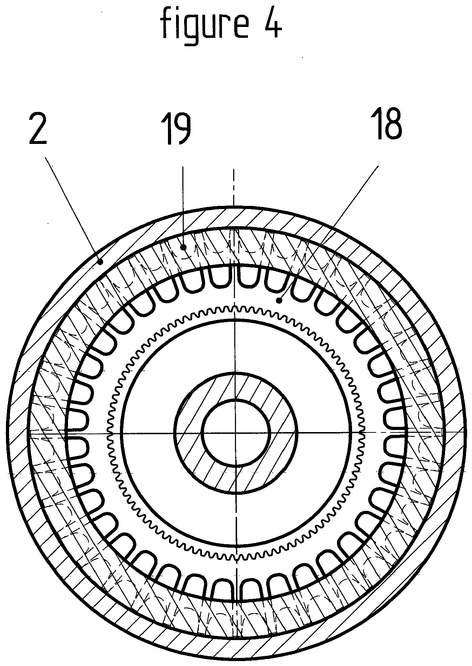

### Description de la figure 4.

La figure représente une coupe suivant F-F de la figure 1, elle montre les cannelures de liaison avec le demi-carter (2), la disposition des lames en éventail du ressort (18) ainsi que la forme des appuis sur chaque lame de l'entretoise (19).

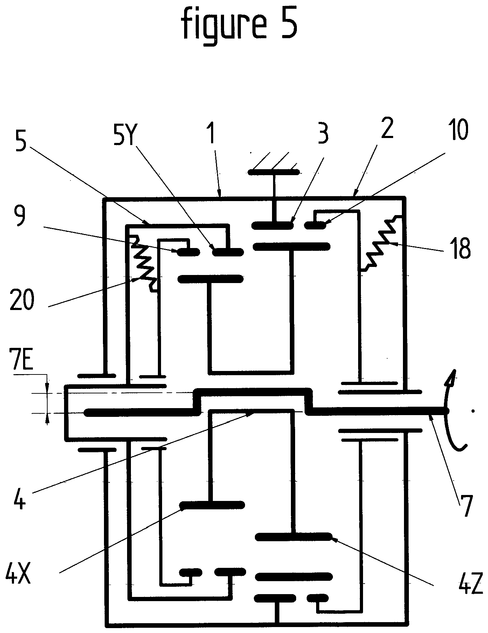

### Description de la figure 5.

La figure représente un schéma de principe du réducteur avec les systèmes de blocage des écarts de position.

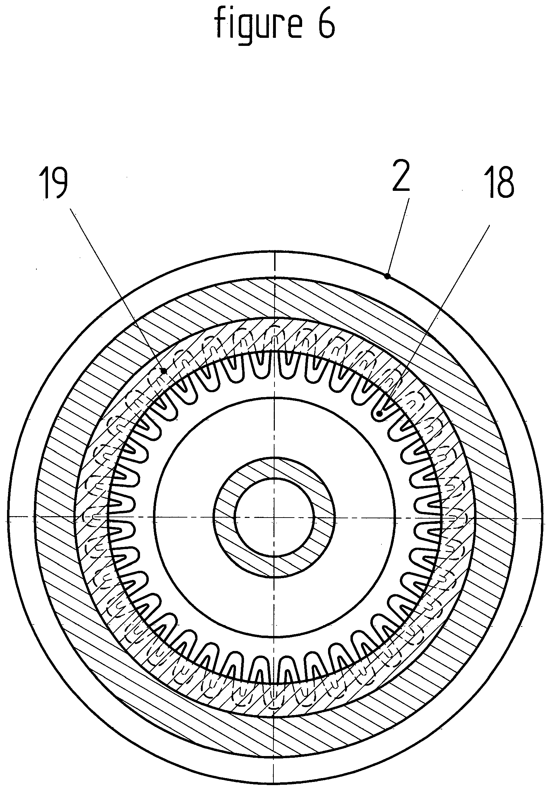

### Description de la figure 6.

La figure représente une coupe suivant H-H de la figure 2, elle montre le ressort (18) moulé en élastomère.

### Description des réalisations.

Le mécanisme de réduction de vitesse est constitué d'une couronne(3)à denture intérieure fixe et reliée de part et d'autre à deux demi-carters(1)et(2), ces derniers servent de guidage à, un arbre d'entrée (7),un arbre de sortie (5), ledit arbre d'entrée (7) comprenant une partie excentrée (7E) guidant et entraînant dans sa mise en rotation une roue orbitale (4) constituée par deux roues à dentures extérieures , l'une (4Z) engrenant avec la couronne (3)à denture intérieure, la seconde(4X)engrenant avec la couronne à denture intérieure (5Y)solidaire de l'arbre de sortie (5) coaxial à l'arbre d'entrée (7) guidé par le demi-carter (1) situé côté sortie

L'écart de position dû au jeu de fonctionnement sur le train d'entrée est éliminé par une couronne à denture intérieure (10) guidée par le demi-carter (2) et associée au ressort (18) constitué soit par des lames disposées en éventail autour d'un moyeu avec des cannelures assurant le centrage et la transmission de l'effort avec le demi-carter (2), ou bien soit au ressort (18) réalisé en élastomère moulé constitué par un profil extérieur et un profil intérieur, ledit profil extérieur est reproduit à l'identique en profil intérieur sur l'entretoise (19), ledit profil intérieur est reproduit à l'identique en profil extérieur sur le moyeu et le flan interne du demi-carter (2). Une entretoise (19) constituée d'un coté par des empreintes moulées s'appuyant d'un coté sur le ressort (18) et de l'autre côté par des talons circulaires bloqués dans des empreintes circulaires réalisées dans la couronne à denture intérieure(10).

Un dispositif de mise en pression avec vis et clavette (26) situé dans le plan de liaison de la couronne à denture intérieure (3) avec le demi-carter (2) permet l'élimination de l'écart de position à l'inversion du mouvement entre la couronne à denture intérieure(3) et la roue à denture extérieure (4Z) de la roue orbitale(4).

L'écart de position dû au jeu de fonctionnement sur le train de sortie est éliminé par une couronne à denture intérieure (9) guidée par la couronne à denture intérieure (5) et reliée au ressort (20) constitué soit par des lames disposées en éventail autour d'un moyeu avec des cannelures assurant le centrage et la transmission de l'effort avec le palier (22), ou bien soit au ressort (20) réalisé en élastomère moulé constitué par un profil extérieur et un profil intérieur, ledit profil extérieur est reproduit à l'identique en profil intérieur sur l'entretoise (21), ledit profil intérieur est reproduit à l'identique en profil extérieur sur le moyeu et le flan interne du palier (22). Une entretoise (21) constituée par des empreintes moulées s'appuyant d'un coté sur le ressort (20) et de l'autre côté par des talons circulaires en appui dans des empreintes circulaires réalisées dans la couronne à denture intérieure(9).

Un dispositif de mise en pression avec vis et clavette (25) situé dans le plan de liaison de l'arbre de sortie (5) et du palier (22) permet l'élimination permanente de l'écart de position à l'inversion du mouvement entre la couronne à denture intérieure (5Y) de l'arbre de sortie (5) et la roue à denture extérieure (4X) de la roue orbitale(4).

La valeur de l'excentration est la moitié de la différence du diamètre primitif de la couronne à denture intérieure (3) et de celui de la roue à denture extérieure (4Z) de la roue (4).

Deux masselottes (6) et(8)constituées chacune par un moyeu excentré et une éventuelle excroissance en forme de portion de lune sont disposées de chaque côté de la roue orbitale (4)et réalisent l'équilibrage dynamique de cette dernière avec l'arbre d'entrée (7) en ayant chacune un centre de gravité orienté spécifiquement pour chaque réduction, la forme de chaque masselotte est dépendante de la valeur de l'excentrique(7 E) et peut être réalisée soit avec le moyeu excentré seul ou aussi avec le moyeu excentré muni d'une excroissance située respectivement à l'intérieur de chaque couronne (3) et (5) et à l'extérieur des roues à dentures extérieures (4Z) et (4X) de la roue orbitale(4).

L'entraînement en rotation et le maintien axial et radial de chaque masselotte (6) et (8) avec l'arbre d'entrée (7) est réalisé par la disposition bloquante du montage et par ses cylindres centrés sur l'axe des demi-carters (1) et (2) et ceux excentrés de la valeur de l'excentrique (7E) et respectivement situés coté sortie et côté entrée.

Le mécanisme des figures 1 et 2 consiste en un arbre d'entrée (7) relié au moteur soit par une liaison coaxiale (11) selon la figure 2, soit par une transmission intermédiaire (12) à axes parallèles ou orthogonaux comme sur la figure 1. La définition selon la figure 1 montre une disposition permettant un trou central de passage dans l'arbre d'entrée (7), les rapports de réduction obtenus dans ce cas sont adaptés à des applications de type robotique selon l'exemple 1. La disposition de la figure 2 avec une liaison coaxiale du moteur et sans trou de passage dans l'arbre d'entrée (7), permet d'obtenir des rapports de réduction selon l'exemple 2.

### Exemple 1 des réductions réalisables.

Selon la figure 1.
Nombre de dents de la couronne à denture intérieure (3) -120-.
Nombre de dents de la roue orbitale(4) et sa roue à denture extérieure (4Z).
-105-108-110-112-114-116.
Nombre de dents de la roue orbitale (4) et sa roue à denture extérieure (4X). 81-82-84-85-86-87-88-90-91-92-93-95-96-98-100-102-104.
Nombre de dents de la couronne à denture intérieure(5). 90-91-92-93-96-99-100-101-105-106-108.
Soit 26 rapports de réduction justes(ou dit finis). -28-31-33-35-36-42-44-45-46-49-53-55-57-63-66- -70-87-91-99-101-106-116-126-145-171-261.

### Exemple 2 des réductions réalisables.

Selon la figure 2.
Nombre de dents de la couronne à denture intérieure (3) -120-.
Nombre de dents de la roue orbitale(4) et sa roue à denture extérieure (4Z). -105-108-110-112-114-116.
Nombre de dents de la roue orbitale(4) et sa roue à denture extérieure (4X). -49-54-56-63-66-68-70-74-75-76-77-78-81-82-84-86-87-88- -90-91-92-93-95-96-98-99-100-102-104.
Nombre de dents de la couronne à denture intérieure(5) -64-66-75-76-78-80-82-85-90-91-92-93-96-99-100- -101-105-106-108.
Soit 41 rapports de réduction justes(ou dit finis). -8-11-13-15-16-17-18-19-21-22-23-26-27-28-29-31-33- -34-35-36-42-44-45-46-49-53-55-57-63-66-70-87-91- -99-101-106-116-126-145-171-261.

## Revendications

1. Mécanisme de réduction de vitesse constitué d'une couronne(3)à denture intérieure fixe et reliée de part et d'autre à deux demi-carters(1,2), ces derniers servent de guidage à, un arbre d'entrée (7), un arbre de sortie (5), ledit arbre d'entrée (7) comprenant une partie excentrée (7E) guidant et entraînant dans sa mise en rotation une roue orbitale (4) constituée par deux roues à dentures extérieures , l'une (4Z) engrenant avec la couronne (3)à denture intérieure, la seconde(4X)engrenant avec la couronne à denture intérieure (5Y)solidaire de l'arbre de sortie (5) coaxial à l'arbre d'entrée (7) guidé par le demi-carter (1) situé côté sortie; et lequel mécanisme est **caractérisé en ce qu'**une couronne à denture intérieure (9) identique et concentrique avec la couronne à denture intérieure (5Y)de l'arbre de sortie (5) est actionnée en rotation par un ressort (20) pour mettre sa denture en appui opposé à celui de la roue à denture extérieure(4X) en contact pour l'entraînement afin d'éliminer l'écart de position lorsque le mouvement est inversé.

2. Mécanisme selon la revendication 1 **caractérisé en ce qu'**une entretoise (21) est constituée par des empreintes moulées s'appuyant d'un côté sur le ressort (20) et de l'autre sur des talons circulaires en contact sur les flans des empreintes réalisées dans la couronne à denture intérieure(9); la mise en pression du ressort(20)est réalisée avant le blocage avec la rotation du palier (22) par des vis et clavette (25) situées dans le plan de liaison de l'arbre de sortie (5) et du palier (22)et assure ainsi l'élimination permanente de l'écart de position au mouvement inversé entre la couronne à denture intérieure (5Y)de l'arbre de sortie (5) et la roue à denture extérieure (4X) de la roue orbitale(4).

3. Mécanisme selon les revendications 1 et 2 **caractérisé en ce qu'** une couronne à denture intérieure (10) identique et concentrique avec la couronne à denture intérieure (3) est actionnée en rotation par un deuxième ressort (18) pour mettre sa denture en appui opposé à celui de la roue à denture extérieure(4Z) en contact pour l'entraînement afin d'éliminer l'écart de position lorsque le mouvement est inversé.

4. Mécanisme selon la revendication 3 **caractérisé en ce qu'**une entretoise(19) est constituée par des empreintes moulées s'appuyant d'un côté sur le ressort(18) et de l'autre sur des talons circulaires en contact avec les flans des empreintes réalisées dans la couronne à denture intérieure (10); la mise en pression du ressort (18) est réalisée avant le blocage avec la rotation du demi-carter (2) par des vis et clavettes (26) situées dans le plan de liaison de la couronne(3) et du demi-carter(2) et assure ainsi l'élimination permanente de l'écart de position au mouvement inversé entre la couronne à denture intérieure (3) et la roue à denture extérieure (4Z) de la roue orbitale(4).

5. Mécanisme selon l'une quelconque des revendications 1,2,3 et 4 **caractérisé en ce que** deux masselottes (6) et (8) constituées chacune par un moyeu excentré et une éventuelle excroissance en forme de portion de lune sont disposées de chaque côté de la roue orbitale (4)et réalisent l'équilibrage dynamique de cette dernière avec l'arbre d'entrée (7) en ayant chacune un centre de gravité orienté spécifiquement pour chaque réduction, la forme de chaque masselotte est dépendante de la valeur de l'excentrique(7 E) et peut être réalisée soit avec le moyeu excentré seul ou aussi avec le moyeu excentré muni d'une excroissance située respectivement à l'intérieur de chaque couronne (3) et (5) et à l'extérieur des roues à dentures extérieures (4Z) et (4X) de la roue orbitale(4).

6. Mécanisme selon la revendication 5 **caractérisé en ce que** l'entraînement en rotation et le maintien axial et radial de chaque masselotte (6) et (8) avec l'arbre d'entrée (7) est réalisé par la disposition bloquante du montage et par ses cylindres centrés sur l'axe des deux demi-carters (1,2) et ceux excentrés de la valeur de l'excentrique (7E) et respectivement situés coté sortie et côté entrée.

7. Mécanisme selon les revendications 1 et 2 **caractérisé en ce que** le ressort (20) est constitué par des lames disposées en éventail autour d'un moyeu cannelé assurant la liaison et le guidage avec le palier (22).

8. Mécanisme selon les revendications 3 et 4 **caractérisé en ce que** le deuxième ressort (18) est constitué par des lames disposées en éventail autour d'un moyeu cannelé assurant la liaison et le guidage avec le demi-carter (2) situé coté entrée.

9. Mécanisme selon les revendications 1 et 2 **caractérisé en ce que** le ressort (20) réalisé en élastomère moulé est constitué par un profil extérieur et un profil intérieur, ledit profil extérieur est reproduit à l'identique en profil intérieur sur l'entretoise (21), ledit profil intérieur est reproduit à l'identique en profil extérieur sur le moyeu et le flan interne du palier (22).

10. Mécanisme selon les revendications 3 et 4 **caractérisé en ce que** le deuxième ressort (18) réalisé en élastomère moulé est constitué par un profil extérieur et un profil intérieur, ledit profil extérieur est reproduit à l'identique en profil intérieur sur l'entretoise (19), ledit profil intérieur est reproduit à l'identique en profil extérieur sur le moyeu et le flan interne du demi-carter (2) situé coté entrée.

## Patentansprüche

1. Mechanismus zur Reduzierung der Geschwindigkeit, bestehend aus einer Krone (3) mit innerer Zahnung, die auf beiden Seiten an zwei Halbgehäusen (1, 2) fixiert und verbunden ist, wobei diese Letzteren als Führung für eine Eingangswelle (7), eine Ausgangswelle (5) dienen, wobei die Eingangswelle (7) einen exzentrischen Teil (7E) umfasst, der, wenn er in Drehung gebracht wird, ein orbitales Rad (4) führt und antreibt, das aus zwei Rädern mit äußeren Zahnungen besteht, wobei das eine (4Z) mit der Krone (3) mit innerer Zahnung eingreift, das andere (4X) mit der Krone mit innerer Zahnung (5Y) eingreift, die einstückig mit der Ausgangswelle (5) ist, die koaxial mit der Eingangswelle (7) ist, die vom Halbgehäuse (1) geführt wird, das sich an der Ausgangsseite befindet; und wobei der Mechanismus **dadurch gekennzeichnet ist, dass** eine Krone mit innerer Zahnung (9), identisch und konzentrisch mit der Krone mit innerer Zahnung (5Y) der Ausgangswelle (5) durch eine Feder (20) in Drehung versetzt wird, um ihre Zahnung in Auflage gegenüber derjenigen des Rads mit äußerer Zahnung (4X) in Kontakt für den Antrieb zu bringen, um den Positionsabstand zu beseitigen, wenn die Bewegung umgekehrt wird.

2. Mechanismus nach Anspruch 1, **dadurch gekennzeichnet, dass** ein Zwischenstück (21) aus geformten Abdrücken gebildet ist, die einerseits auf der Feder (20) und andererseits auf runden Absätzen in Kontakt auf den Zuschnitten der Abdrücke aufliegt, die in der Krone mit innerer Zahnung (9) durchgeführt sind; die Unterdrucksetzung der Feder (20) vor der Blockierung mit der Drehung des Lagers (22) durch Schrauben und Keil (25) durchgeführt wird, die sich auf der Ebene der Verbindung der Ausgangswelle (5) und des Lagers (22) befinden, und somit die dauerhafte Beseitigung des Positionsabstands bei umgekehrter Bewegung zwischen der Krone mit innerer Zahnung (5Y) der Ausgangswelle (5) und dem Rad mit äußerer Zahnung (4X) des orbitalen Rads (4) sicherstellt.

3. Mechanismus nach Anspruch 1 und 2, **dadurch gekennzeichnet, dass** eine Krone mit innerer Zahnung (10), identisch und konzentrisch mit der Krone mit innerer Zahnung (3) durch eine zweite Feder (18) in Drehung versetzt wird, um ihre Zahnung in Auflage gegenüber derjenigen des Rads mit äußerer Zahnung (4Z) in Kontakt für den Antrieb zu bringen, um den Positionsabstand zu beseitigen, wenn die Bewegung umgekehrt wird.

4. Mechanismus nach Anspruch 3, **dadurch gekennzeichnet, dass** ein Zwischenstück (19) aus geformten Abdrücken gebildet ist, die einerseits auf der Feder (18) und andererseits auf runden Absätzen in Kontakt mit den Zuschnitten der Abdrücke aufliegt, die in der Krone mit innerer Zahnung (10) durchgeführt sind; die Unterdrucksetzung der Feder (18) vor der Blockierung mit der Drehung des Halbgehäuses (2) durch Schrauben und Keile (26) durchgeführt wird, die sich auf der Ebene der Verbindung der Krone (3) und des Halbgehäuses (2) befinden und somit die dauerhafte Beseitigung des Positionsabstands bei der umgekehrten Bewegung zwischen der Krone mit innerer Zahnung (3) und dem Rad mit äußerer Zahnung (4Z) des orbitalen Rads (4) sicherstellt.

5. Mechanismus nach einem der Ansprüche 1, 2, 3 und 4, **dadurch gekennzeichnet, dass** zwei Pendelgewichte (6) und (8), die jeweils aus einer exzentrischen Nabe und einer eventuellen Auswölbung in Form eines Mondabschnitts bestehen, auf jeder Seite des orbitalen Rads (4) angeordnet sind und das dynamische Gleichgewicht dieses Letzteren mit der Eingangswelle (7) erzeugen, indem jedes einen Schwerpunkt aufweist, der spezifisch für jede Reduzierung ausgerichtet ist, wobei die Form jedes Pendelgewichts vom Wert des Exzenters (7E) abhängt und entweder mit der exzentrischen Nabe allein oder auch mit der exzentrischen Nabe, ausgestattet mit einer Auswölbung, durchgeführt werden kann, die sich jeweils im Inneren jeder Krone (3) und (5) und außerhalb der Räder mit äußeren Zahnungen (4Z) und (4X) des orbitalen Rads (4) befindet.

6. Mechanismus nach Anspruch 5, **dadurch gekennzeichnet, dass** die Drehung und das axiale und radial Festhalten jedes Pendelgewichts (6) und (8) mit der Eingangswelle (7) durch die Blockiervorrichtung der Montage und durch ihre Zylinder durchgeführt wird, die auf der Achse der zwei Halbgehäuse (1, 2) zentriert sind, und diejenigen, die um den Wert des Exzenters (7E) exzentrisch und jeweils auf der Ausgangs- und der Eingangsseite angeordnet sind.

7. Mechanismus nach Anspruch 1 und 2, **dadurch gekennzeichnet, dass** die Feder (20) aus Klingen besteht, die fächerförmig um eine gerippte Nabe angeordnet sind, die die Verbindung und die Führung mit dem Lager (22) sicherstellt.

8. Mechanismus nach Anspruch 3 und 4, **dadurch gekennzeichnet, dass** eine zweite Feder (18) aus Klingen besteht, die fächerförmig um eine gerippte Nabe angeordnet sind, die die Verbindung und die Führung mit dem Halbgehäuse (2) sicherstellt, das sich auf der Eingangsseite befindet.

9. Mechanismus nach Anspruch 1 und 2, **dadurch gekennzeichnet, dass** die Feder (20), die aus einem geformten Elastomer hergestellt ist, aus einem äußeren Profil und einem inneren Profil besteht, wobei das äußere Profil identisch als inneres Profil auf dem Zwischenstück (21) reproduziert ist, das innere Profil identisch als äußeres Profil auf der Nabe und dem inneren Zuschnitt des Lagers (22) reproduziert ist,

10. Mechanismus nach Anspruch 3 und 4, **dadurch gekennzeichnet, dass** eine zweite Feder (18), hergestellt aus geformtem Elastomer, aus einem äußeren Profil und einem inneren Profil besteht, wobei das äußere Profil identisch als inneres Profil auf dem Zwischenstück (19) reproduziert ist, das innere Profil identisch als äußeres Profil auf der Nabe und dem inneren Zuschnitt des Halbgehäuses (2) reproduziert ist, das sich auf der Eingangsseite befindet.

## Claims

1. Reduction gear mechanism consisting of a fixed inner ring gear (3) and connected on either side to two case-halves (1, 2), the latter serve as a guide to, an input shaft (7), an output shaft (5), said input shaft (7) comprising an eccentric portion (7E) guiding and driving during the rotation thereof an orbital wheel (4) consisting of two outer gears, one gear (4Z) meshing with the inner ring gear (3), the second gear (4X) meshing with the inner ring gear (5Y) integral with the output shaft (5) coaxial to the input shaft (7) guided by the case-half (1) located on the output side; and said mechanism is **characterised in that** an identical inner ring gear (9) concentric with the inner ring gear (5Y) of the output shaft (5) is actuated in rotation by a spring (20) to place its gear bearing against opposite that of the outer gear (4X) in contact for the driving in order to suppress the positional deviation when the movement is inversed.

2. Mechanism according to claim 1 **characterised in that** a spacer (21) is comprised of moulded imprints bearing on one side on the spring (20) and on the other side on circular heels in contact on the flanks of the imprints made in the inner ring gear (9); the pressuring of the spring (20) is carried out before the blocking with the rotation of the bearing (22) via screws and a key (25) located in the connection plane of the output shaft (5) and of the bearing (22) and as such constantly suppress the position deviation opposite to movement between the inner ring gear (5Y) of the output shaft (5) and the outer gear (4X) of the orbital wheel (4).

3. Mechanism according to claims 1 and 2 **characterised in that** an identical inner ring gear (10) concentric with the inner ring gear (3) is actuated in rotation by a second spring (18) to place its gear bearing against opposite that of the outer gear (4Z) in contact for the driving in order to suppress the positional deviation when the movement is inversed.

4. Mechanism according to claim 3 **characterised in that** a spacer (19) is comprised of moulded imprints bearing on one side on the spring (18) and on the other side on circular heels in contact with the flanks of the imprints made in the inner ring gear (10); the pressuring of the spring (18) is carried out before the blocking with the rotation of the case-half (2) by screws and keys (26) located in the connection plane of the gear (3) and of the case-half (2) and as such constantly suppresses the positional deviation opposite to movement between the inner ring gear (3) and the outer wheel (4Z) of the orbital wheel (4).

5. Mechanism according to any one of claims 1, 2, 3 and 4 **characterised in that** two flyweights (6) and (8) each comprised of an eccentric hub and a possible protuberance in the shape of a moon portion are arranged on each side of the orbital wheel (4) and carry out a dynamic balancing of the latter with the input shaft (7) each having a centre of gravity oriented specifically for each reduction, the shape of each flyweight depends on the value of the eccentric (7E) and can be carried out either with the eccentric hub alone or also with the eccentric hub provided with a protuberance located respectively inside each gear (3) and (5) and outside the outer gears (4Z) and (4X) of the orbital wheel (4).

6. Mechanism according to claim 5 **characterised in that** the driving in rotation and the axial and radial maintaining of each flyweight (6) and (8) with the input shaft (7) is carried out by the blocking arrangement of the assembly and by the cylinders thereof centred on the axis of the two case-halves (1, 2) and those eccentric of the value of the eccentric (7E) and respectively located on the output side and input side.

7. Mechanism according to claims 1 and 2 **characterised in that** the spring (20) is comprised of strips arranged in the shape of a fan around a fluted hub that ensures the connection and the guiding with the bearing (22).

8. Mechanism according to claims 3 and 4 **characterised in that** a second spring (18) is comprised of strips arranged in the shape of a fan around a fluted hub that ensures the connection and the guiding with the case-half (2) located on the input side.

9. Mechanism according to claims 1 and 2 **characterised in that** the spring (20) made of moulded elastomer is comprised of an outer profile and an inner profile, said outer profile is reproduced identically as an inner profile on the spacer (21), said inner profile is reproduced identically as an outer profile on the hub and the inner flank of the bearing (22).

10. Mechanism according to claims 3 and 4 **characterised in that** a second spring (18) made of moulded elastomer is comprised of an outer profile and an inner profile, said outer profile is reproduced identically as an inner profile on the spacer (19), said inner profile is reproduced identically as an outer profile on the hub and the inner flank of the half-case (2) located on the input side.
